(19) Europäisches Patentamt
European Patent Office
Office européen des brevets

(11) **EP 2 709 298 B1**

(12) **EUROPEAN PATENT SPECIFICATION**

(45) Date of publication and mention
of the grant of the patent:
**11.07.2018  Bulletin 2018/28**

(51) Int Cl.:
***H04J 3/06*** (2006.01)

(21) Application number: **12006560.2**

(22) Date of filing: **18.09.2012**

(54) **Synchronization method and electronic apparatus using redundant links**

Synchronisationsverfahren und elektronische Vorrichtung unter  Verwendung redundanter Verbindungen

Procédé de synchronisation et dispositif électronique utilisant de liens redondants

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.03.2014  Bulletin 2014/12**

(73) Proprietor: **Omicron electronics GmbH**
**6833 Klaus (AT)**

(72) Inventors:
• **Marinescu, Cristian**
**6850 Dornbirn (AT)**
• **Komes, André**
**6857 Dornbirn-Haselstauden (AT)**

(74) Representative: **Banzer, Hans-Jörg et al**
**Kraus & Weisert**
**Patentanwälte PartGmbB**
**Thomas-Wimmer-Ring 15**
**80539 München (DE)**

(56) References cited:
**EP-A1- 2 254 267      EP-A2- 2 209 239**
**US-A1- 2006 203 851**

• **KIRRMANN H ET AL: "HSR: Zero recovery time and low-cost redundancy for Industrial Ethernet (High availability seamless redundancy, IEC 62439-3)", EMERGING TECHNOLOGIES&FACTORY AUTOMATION, 2009. ETFA 2009. IEEE CONFERENCE ON, IEEE, PISCATAWAY, NJ, USA, 22 September 2009 (2009-09-22), pages 1-4, XP031575609, ISBN: 978-1-4244-2727-7**
• **TAKAHIDE MURAKAMI ET AL: "A master redundancy technique in IEEE 1588 synchronization with a link congestion estimation", PRECISION CLOCK SYNCHRONIZATION FOR MEASUREMENT CONTROL AND COMMUNICATION (ISPCS), 2010 INTERNATIONAL IEEE SYMPOSIUM ON, IEEE, PISCATAWAY, NJ, USA, 27 September 2010 (2010-09-27), pages 30-35, XP031780860, ISBN: 978-1-4244-5978-0**

**Description**

TECHNICAL FIELD

Embodiments of the invention relate to methods of synchronizing an electronic apparatus with a master clock and a corresponding electronic apparatus. Embodiments of the invention relate to methods and electronic apparatuses in which a clock of an apparatus is synchronized with a master clock using synchronization messages transmitted over a communication network.

BACKGROUND

Precision time synchronization has to be achieved in a wide variety of technical fields, including automation systems of electric power systems or other industrial automation systems. For illustration, in an automation system of an electric power system, plural intelligent electronic devices (IEDs) are respectively synchronized with a master clock. Other examples include failure detection in electric power systems, factory automation control, or similar technical fields.

Various synchronization procedures are known in the art. WO 03/028258 A1 and WO 03/028259 A1 describe synchronization techniques. A standardized synchronization procedure is defined by the Precision Time Protocol (PTP).

PTP was originally defined in the standard IEEE 1588-2002 entitled "Standard for a Precision Clock Synchronization Protocol for Networked Measurement and Control Systems". A revised standard, IEEE 1588-2008 was released in 2008, which is also known as PTP Version 2. Both standards will be referred to as IEEE 1588 or PTP herein. PTP is designed to achieve high synchronization among intelligent devices using a non-deterministic communication medium like a computer network. The standard describes a master-slave architecture for the distribution of time. The grandmaster, distributing the time, is elected using the Best Master Clock (BMC) Algorithm. IEEE 1588 defines several transport protocols (layer 2, IPv4, IPv6), two modes (one step, two step), and two types of transparent clocks (End-to-End, Peer-to-Peer). The End-to-End (E2E) transparent clock measures the time which a PTP messages needs to transit the transparent clock, and delivers this information in the correction field of the PTP message (the propagation delay of the link is not corrected). Using Peer-to-Peer (P2P) transparent clocks, the propagation delay of the link is also considered in addition to the transit time through the transparent clock, and is also included in the correction field of the PTP message.

The IEEE 1588 Peer-to-Peer synchronization method uses transparent clocks to determine the propagation delay of synchronization messages sent by a synchronization master. Synchronizing nodes use this propagation delay information to determine their current clock offset to the master clock and adjust their clocks accordingly. This offset calculation is accomplished by time stamping packets at transparent clocks ingress and egress ports, allowing the determination of the propagation delays of a synchronization message and the egress time at the synchronization master of this message.

At the same time, critical distributed systems have a great demand for fault tolerance and reliability. To eliminate the single point of failure which a single communication link imposes to such systems, redundant links can be used. To make use of the advantages of the Ethernet technology and further increase the link failure robustness of Ethernet networks, several redundant Ethernet solutions are standardized and in use. Examples include International Electrotechnical Commission, IEC 62439-3 Clause 5 - High-availability Seamless Redundancy (HSR). IEC, August 2009 or International Electrotechnical Commission, IEC 62439-3 Clause 4 - Parallel Redundancy Protocol (PRP). IEC, August 2009. Generally, such solutions introduce an abstraction layer that offers applications the same interface non-redundant Ethernet links provide. This abstraction of conventional approaches can be accomplished by discarding packet duplicates that are transferred over a redundant link and by passing the other packet to the application. Thus, the application executed on an apparatus does not know on which port a packet was really received. US 6,252,445 B1 describes a method and apparatus for enhancing a clock resolution, in which a selection circuit is used to discard all but one tap signal.

EP 2 254 267 A1, which serves as basis for the preamble of the independent claims, discloses a method of recovering timing information over packet networks. A receiver receives a plurality of packet streams over different paths from the same source. An aggregate delay estimate is formed by combining weighted filtered delays for the streams.

EP 2 209 239 A2 relates to a method and arrangement for adjustment of a clock signal. A first network element receives synchronisation messages from each one of plural second network elements. Phase indicators are produced by the first network element. Each phase indicator is associated with a different second network element.

BRIEF SUMMARY

It is an object of the invention to provide methods and an apparatus which allow synchronization with a master clock to be performed while enhancing fault tolerance and reliability. It is in particular an object of the invention to provide methods and an apparatus in which the module which performs the synchronization has access to and uses information on the transmission path of messages of a synchronization protocol, such as PTP.

According to methods and apparatuses of embodiments, a clock of an electronic apparatus is synchronized with a master clock. The electronic apparatus has a first and a second network interface and a PTP instance which handles synchronization messages received at the first and second network interfaces. The electronic apparatus receives synchronization messages over at least two different networks. The electronic apparatus uses the synchronization messages transmitted over different networks for synchronization with the master, rather than using only the first arriving synchronization message and discarding the synchronization message transmitted over the other network. The first network interface may be a first Ethernet port and the second network interface may be a second Ethernet port.

According to methods and apparatuses of embodiments, a synchronization according to IEEE 1588 may be combined with redundant transmission paths, e.g. with redundant Ethernet, in a manner in which the IEEE 1588 module and the redundant Ethernet implementation are aware of each other, so that the IEEE 1588 module is able to process synchronization messages that are transmitted over both redundant networks. When compared to a conventional redundant Ethernet implementation such as HSR or PRP, various effects can be attained by such an implementation. The IEEE 1588 module has information on the transmission path of a synchronization message and may use this information to increase accuracy. For illustration, using the additional timing information of the redundant synchronization messages and the timing information of the redundant network links, it is possible to reduce the effects of inaccurate time stamps that may be introduced by the clock drift of digital clocks. By reducing the time stamping inaccuracy effects, an increase of the synchronization accuracy of IEEE 1588 is achieved.

The electronic apparatus may determine the link delay individually for the first and second network interfaces with the peer-to-peer method defined in IEEE 1588. The link delays may be used when combining the synchronization messages received at the first and second network interfaces to determine a clock offset between the slave clock of the apparatus and the master clock. Averaging of clock correction parameters may be performed. A weighted average of first and second clock correction parameters may be computed, depending on propagation delay times associated with the transmission of synchronization messages over the first network and the second network. A weighted average of the first and second clock correction parameters is selectively computed only if the delay times fulfil predefined criteria, while one of the first and second clock correction parameters will be selected for aligning the slave clock with the master clock otherwise. Weighting factors of the first and second clock correction parameters which are used to compute the weighted average may be set based on the delay times associated with transmission of synchronization messages over the first network and the second network, respectively.

According to an embodiment, a method of synchronizing an electronic apparatus with a master clock is provided. At least one first synchronization message is received at a first interface of the electronic apparatus. The at least one first synchronization message is transmitted from a further apparatus over a first network. At least one second synchronization message is transmitted from the further apparatus over a second network and is received at a second network interface of the electronic apparatus. A first clock correction parameter is determined based on the at least one first synchronization message. A second clock correction parameter is determined based on the at least one second synchronization message. A clock of the electronic apparatus is aligned with the master clock by using both the first clock correction parameter and the second clock correction parameter for the clock alignment.

The at least one first and second synchronization messages may be messages defined in the PTP. For illustration, the at least one first synchronization message may include a first PTP Sync-message. The at least one first synchronization message may include a first PTP Delay_Resp-message. The at least one second synchronization message may include a second PTP Sync-message. The at least one second synchronization message may include a second PTP Delay_Resp-message. Aligning the clock of the electronic apparatus with the master clock may include determining a clock offset by which the clock and the master clock differ from each other. By adding this clock offset to the clock of the apparatus, a synchronized clock value can be generated using the local clock of the electronic apparatus. The first clock correction parameter may be determined as a first clock offset based on the first Sync-message, the second clock correction parameter may be determined as a second clock offset based on the second Sync-message, and the clock offset may be determined as a weighted average of the first clock offset and the second clock offset. Alternatively or additionally, the first and second clock correction parameters may include propagation delay times, residence times of the respective synchronization message on devices along the path on which the respective synchronization message is transmitted, or similar.

According to an embodiment, an electronic apparatus is provided which comprises a first network interface configured to receive at least one first synchronization message transmitted from a further apparatus over a first network. The electronic apparatus comprises a second network interface configured to receive at least one second synchronization message transmitted from the further apparatus over a second network. The electronic apparatus comprises a processing device configured to determine a first clock correction parameter based on the at least one first synchronization message and a second clock correction parameter based on the at least one second synchronization message, and to align a clock of the electronic apparatus with a master clock by using both the first clock correction parameter and the second clock correction parameter for the clock alignment.

The processing device may include a redundancy module interfaced with the first and second network interfaces and a synchronization module interfaced with the redundancy module. The synchronization module may be configured to determine the first and second clock correction parameters and to align the clock of the electronic apparatus with the master clock as a function of both the first correction parameter and the second correction parameter. The redundancy module and the synchronization module may be implemented in hardware, in software, or a combination thereof. For illustration, the redundancy module and the synchronization module may be implemented as different software modules executed by a processor of the electronic apparatus.

The electronic apparatus may be configured to perform the method of any one aspect or embodiment. The processing device may perform the respective processing operations.

A clock alignment which uses both the first and the second clock alignment parameter does not need to be performed in each synchronization cycle. For illustration, a clock alignment which uses both the first and the second clock alignment parameter may be performed in some synchronization cycles, while a clock alignment based on the first synchronization message(s) only or based on the second synchronization message(s) only may be performed in other synchronization cycles. The electronic apparatus may be configured to wait for a pre-determined time period after the earlier one of the first and second synchronization message(s) was received. If the later-arriving one of the first and second synchronization message(s) is not received within the pre-determined time window, a procedure may be initiated in which the clock alignment is performed based on the earlier-arriving one of the first and second synchronization message(s) only. I.e., while the clock alignment is performed based on both the first clock alignment parameter and the second clock alignment parameter in some synchronization cycles, a fall-back procedure may be selectively activated in which a clock alignment is performed using either the first synchronization message(s) only or the second synchronization message(s) only.

The sign of the first and second correction parameters is considered. By way of example, if both are representing a positive correction of the clock, or both are representing a negative one, the first arriving message (from the fastest network path) should prevail. Otherwise, if the correction parameters have different signs, both of them should be considered (by combining them as described) when adjusting the clock.

The electronic apparatus may be an intelligent electronic device (IED) of an automation system of an electric power system.

According to an embodiment, an electric power system is provided which has an automation system. The automation system comprises the electronic apparatus according to an embodiment and a further apparatus comprising a master clock. The further apparatus is coupled to the electronic apparatus by a first network and a second network.

Methods and apparatuses according to embodiments may be used for synchronization according to the PTP. Methods and apparatuses may in particular be used for synchronization among various apparatuses of an electric power system, an industrial automation system, or a similar system.

BRIEF DESCRIPTION OF DRAWINGS

Embodiments of the invention will be explained herein below with reference to the drawings. Throughout the drawings, like reference numerals refer to like elements.

FIG. 1 is a schematic representation of a system in which methods and apparatuses according to embodiments may be used.

FIG. 2 is a block diagram of an apparatus according to an embodiment.

FIG. 3 is a flow chart of a method of an embodiment.

FIG. 4 illustrates messages transmitted in methods and systems of embodiments.

FIG. 5 is a schematic representation of a system according to an embodiment.

FIG. 6 illustrates propagation delays which may be used in methods and apparatuses of embodiments.

FIG. 7 is a flow chart of a method of another embodiment.

DESCRIPTION OF EMBODIMENTS

Embodiments of the invention will be described in more detail with reference to the drawings. While some embodiments will be described in specific contexts, such as specific messages defined in PTP, embodiments of the invention are not limited to the specific contexts. While some embodiments will be described in the context of PTP End-To-End (E2E) procedures or PTP Peer-To-Peer (P2P) procedures, the embodiments may be used for both P2P and E2E synchronization techniques.

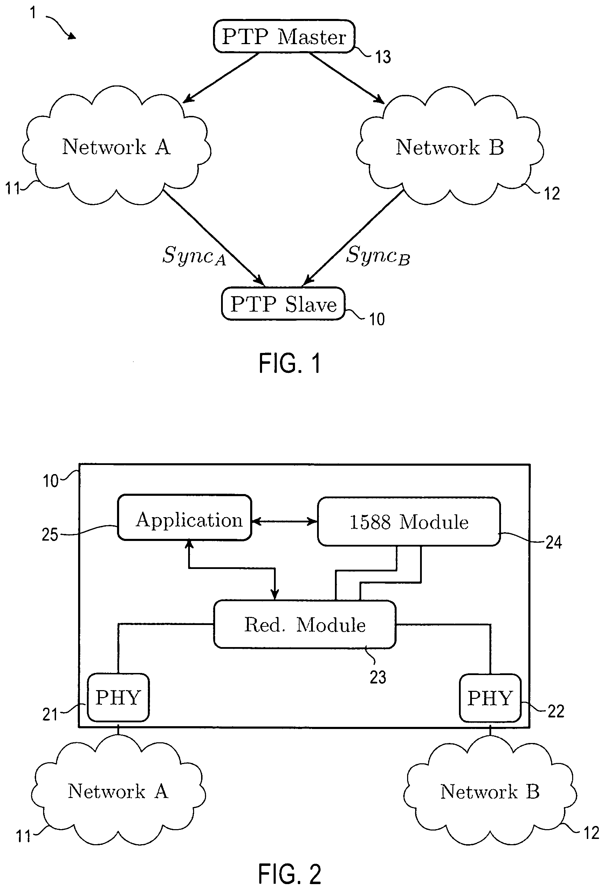

FIG. 1 shows a system 1 in which embodiments of the invention may be used to synchronize a clock of an electronic apparatus 10 with a clock of a further apparatus 13. The electronic apparatus 10 operates as a PTP slave. The further apparatus 13 operates as a PTP master. Synchronization may be performed by determining a clock offset which indicates the difference between the master clock of the further apparatus 13, i.e. the PTP master, and the local clock of the electronic apparatus 10, i.e. the PTP slave. By adding this clock offset to the clock value of the local clock of the electronic apparatus 10, a synchronized clock value may be obtained which is synchronized against the master clock of the PTP master. While only one PTP slave is illustrated in the system 1, the system 1 may include a plurality of PTP slaves. Each one or at least several of the PTP slaves may have a configuration and operation which is identical to the one of the electronic apparatus 10, which will be explained in more detail below. Similarly, while only one PTP master is shown in the system 1, the system 1 may also include several PTP masters. One of the masters may be selected according to the Best Master Clock (BMC) algorithm. Synchronization is performed by transmitting synchronization messages between the PTP master and the PTP slave. The synchronization messages may include a Sync-message defined in PTP, a Delay_Resp-message defined in PTP, or other messages, such as Follow_up-messages defined in PTP.

The electronic apparatus 10 is coupled to the further apparatus 13 via a first network 11 and a second network 12. The first network 11 may be an Ethernet network. The second network 12 may be an Ethernet network. The first and second networks 11, 12 are communication networks. The first and second networks 11, 12 may respectively be switched networks. The electronic apparatus 10 is configured to receive one or several first synchronization messages transmitted from the further apparatus 13 to the electronic apparatus 10 via the first network 11. The electronic apparatus 10 is configured to receive one or several second synchronization messages transmitted from the further apparatus 13 to the electronic apparatus 10 via the second network 12. The electronic apparatus 10 is configured such that not only time stamp information included in the respective synchronization messages, but also information on the transmission path is utilized when processing the synchronization messages. The electronic apparatus 10 may be configured to determine a first clock correction parameter based on the first synchronization messages transmitted over the first network 11. The electronic apparatus 10 may be configured to determine a second clock correction parameter based on the second synchronization messages transmitted over the second network 12. The electronic apparatus 10 may be configured to combine the first clock correction parameter and the second correction parameter to determine a clock offset between the clock of the electronic apparatus 10 and the master clock. This procedure may be performed in each synchronization cycle.

For illustration, the electronic apparatus 10 may include a synchronization module which receives a first Sync-message transmitted over the first network 11, including information on the network over which the first Sync-message was transmitted. The electronic apparatus 10 may compute a first clock offset, using conventional PTP procedures applied to the first Sync-message. The synchronization module may receive a second Sync-message transmitted over the second network 12, including information on the network over which the second Sync-message was transmitted. The electronic apparatus 10 may compute a second clock offset, using conventional PTP procedures applied to the second Sync-message. The electronic apparatus 10 may compute the clock offset used for aligning the slave clock with the master clock as a weighted average of the first and second clock offsets. The weighting coefficients may depend on propagation delays of the first and second Sync-message.

While the clock offset which is used for clock alignment may normally be determined based on both the first synchronization message(s) and the second synchronization message(s), a fall-back procedure may be activated when only the first synchronization message(s) or only the second synchronization message(s) are received. In such conditions, the clock alignment may be performed based on the first synchronization message(s) only or based on the second synchronization message(s) only, depending on which synchronization message(s) were successfully received at the electronic apparatus. The fall-back procedure may also be activated when the time difference between receipt of the first synchronization message and receipt of the second synchronization message reaches or exceeds a pre-determined threshold. Clock alignment remains possible, even in operation conditions in which one of the two transmission paths is exceptionally blocked.

The sign of the correction parameters is considered for the decision to combine these parameters. If both the first and the second clock correction parameter represent a positive correction of the clock, or if both represent a negative one, the first arriving message (from the fastest network) should prevail. Otherwise, if the correction parameters present different signs, both of them should be considered when adjusting the clock.

FIG. 2 is a schematic block diagram representation of an electronic apparatus 10 according to an embodiment. The electronic apparatus 10 comprises a first network interface 21 at which synchronization messages transmitted over the first network 11 are received. The electronic apparatus 10 comprises a second network interface 22 at which synchronization messages transmitted over the first network 12 are received. The first network interface 21 may be a first Ethernet port and the second network interface 22 may be a second Ethernet port.

The electronic apparatus 10 provides a combination of redundant Ethernet or other redundant communication channels with synchronization according to PTP. The electronic apparatus 10 includes a redundancy module 23 coupled to the first network interface 21 and the second network interface 22. The electronic apparatus 10 includes a synchronization module 24. The redundancy module 23 and the synchronization module 24 may respectively be implemented in hardware, software, or a combination thereof. The synchronization module 24 may be a PTP instance executed by a processing device of the electronic apparatus 10 and may thereby act as a "1588 module" configured to process messages defined in PTP, i.e. IEEE 1588. The redundancy module 23 is configured to provide messages received at the first network interface 21 and the second network interface 22 to other functional units of the electronic apparatus 10. The redundancy module 23 is configured to provide first synchronization messages received at the first network interface 21 and second synchronization messages received at the second network interface 22 to the synchronization module 24 in such a way that the synchronization module 24 knows whether the respective synchronization message was received at the first network interface 21 or the second network interface 22. Different protocols may be used for data transmission over the first network interface 21 and the second network interface 22. In this case, the redundancy module 23 may be configured to handle the different network protocols. For illustration, by virtue of the redundancy module 23, the synchronization module 24 may communicate with the master 13 using a first protocol (such as IPv4) over the first network 11 and using the same or a different second protocol (such as IPv6) over the second network 12.

Various effects are attained when the synchronization module 24 is aware of the network redundancy and is provided with information on the network interface 21, 22 at which a synchronization message was received. The synchronization module 24 is capable of determining the link delay(s) and to compensate the propagation delay of a synchronization message. Further, due to accurate compensation of propagation delays, it is possible to achieve high synchronization accuracy. This may be of importance to the precision requirements of some time critical applications.

The first and second synchronization messages may be datagrams. At least some of the first and second synchronization messages may be datagrams which include time stamps of the master clock. At least some of the first and second synchronization messages may be datagrams which include timing information, such as residence times or other information on the transmission history, written into the respective datagram by devices along the path on which the respective first or second synchronization message is transmitted. The synchronization messages may include Sync-messages and/or Delay_Resp-messages defined in PTP. The synchronization module 24 may also be configured to output first synchronization messages, e.g. a PTP Delay_Req-message, over the first network interface 21 and to output second synchronization messages, e.g. a PTP Delay_Req-message, over the second network interface 22.

The synchronization module 24 may be configured to determine a first clock correction parameter based on the first synchronization message. The synchronization module 24 may compute a first clock offset based on a time stamp included in a Sync-message received at the first network interface 21. The synchronization module 24 may be configured to determine a second clock correction parameter based on the second synchronization messages. The synchronization module 24 may compute a second clock offset based on a time stamp included in a Sync-message received at the second network interface 22. The synchronization module 24 may combine the first and second clock offsets to compute a clock offset, which represents a difference between the master clock and the clock of the electronic apparatus 10. The clock offset may be used for clock alignment, e.g. by adding the clock offset to the local clock value of the electronic apparatus 10. The synchronization module 24 may perform alternative or additional processing to determine clock correction parameters. For illustration, link delays for transmission on links of the first and second networks 11, 12 may be determined. Timing information included in synchronization messages may be evaluated to determine the link delays. The timing information may include time stamps indicating the ingress and egress times of the synchronization message at devices positioned along the transmission path of the respective synchronization message. The timing information may include information on residence times, i.e. on a difference between ingress and egress time stamps, at the devices along the transmission path. Alternatively or additionally, propagation delays between the further apparatus which has the master clock and the electronic apparatus 10 may be determined and may be used for clock alignment.

Alternatively or additionally, the local clock of the electronic apparatus 10 may be used to determine whether the first synchronization message(s) or the second synchronization message(s) can be expected to provide better synchronization. The synchronization module 24 may be configured to determine whether smaller clock offsets between master clock and local clock result from the first synchronization message(s) or the second synchronization message(s), and may perform clock alignment based thereon.

The electronic apparatus 10 may include at least one further application module 25. The redundancy module 23 may be configured to provide data received at the first and second network interfaces 21, 22 to the further application module(s) 25. The synchronization module 24 may be configured to provide time information (e.g. a synchronized clock value) to the further application module(s) 25.

In the electronic apparatus 10, the redundancy module 23 cooperates with the synchronization module 24 in a way that the synchronization module 24 is able to differentiate on which Ethernet port the synchronization messages were received. The synchronization module 24 may be configured to invoke messages on a per port basis, as illustrated by the two separate connections between the synchronization module 24 and the redundancy module 23. This configuration allows the synchronization module 24 to determine the link delay individually for each port with the peer-to-peer method defined in PTP. By combining the clock correction information of synchronization messages received at the different Ethernet ports on each synchronization cycle, the effect of inaccurate time stamps, entailed by the usage of a quartz as time source, can be reduced. This improves the synchronization accuracy on average. The synchronization accuracy is influenced by the time stamp accuracy of devices on the path on which synchronization messages are transmitted, such as transparent clock switches. The major part of this inaccuracy added per routing device is the clock accuracy of the used time stamping method. Time stamping units are frequently driven by a quartz, which entails inaccuracies on each generated time stamp. These time stamping errors are limited but unpredictable and are caused by the nature of a quartz. For illustration, the accuracy of a quartz depends heavily on its temperature and other environmental influences. The electronic apparatus 10 can improve accuracy even in the presence of such time stamping errors, by combining the synchronization information received over at least two networks.

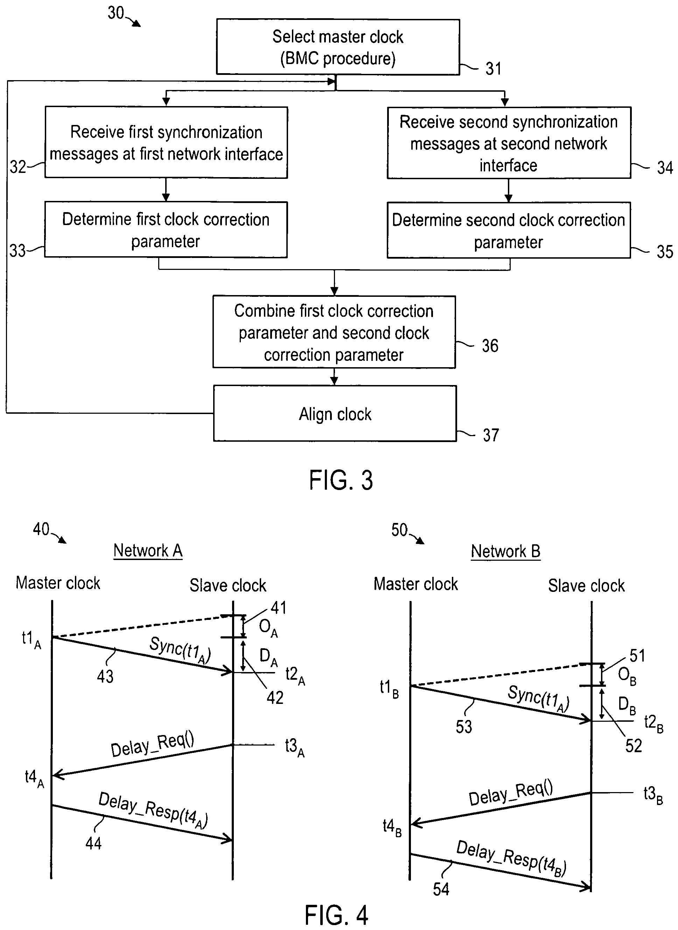

FIG. 3 is a flow chart of a method 30 of an embodiment. The method 30 may be automatically performed using an electronic apparatus according to an embodiment. The method 30 may be performed to synchronize the electronic apparatus with a master clock. Synchronization is attained by determining a clock offset between the master clock and the local clock of the electronic apparatus. The clock offset may be added to the local clock value to thereby establish a synchronized clock value.

At step 31, a master clock may be selected. The BMC algorithm may be performed to select the master clock. First and second synchronization messages may be received from the selected master clock and may be processed in steps 32-35. The first synchronization message(s) may be transmitted over a first transmission path which is different from a second transmission path along which the second synchronization message(s) are transmitted.

At step 32, at least one first synchronization message may be received at a first network interface of the electronic apparatus. At step 33, a first clock correction parameter may be determined based on the at least one first synchronization message. The first clock correction parameter may include or may be a first clock offset.

At step 34, at least one second synchronization message may be received at a second network interface of the electronic apparatus. At step 35, a second clock correction parameter may be determined based on the at least one second synchronization message. The second clock correction parameter may include or may be a second clock offset.

At step 36, the first clock correction parameter and the second clock correction parameter are combined with each other. For illustration, a clock offset may be computed as a weighted average of the first clock offset and the second clock offset. Weighting factors may be determined based on timing information included in the first and second synchronization messages. At least one of the weighting factors may be determined based on both timing information included in a first synchronization message and timing information included in a second synchronization message. The timing information may also be used to determine whether the clock offset shall be determined as a weighted average of the first and second clock offset.

At step 37, the determined clock offset can be used for aligning the local clock of the electronic apparatus with the master clock. For illustration, when an application requests time information, a synchronized clock value can be provided by adding the clock offset to the value of the local clock of the electronic apparatus. Steps 32-37 may be repeated in each synchronization cycle.

Various techniques may be used to combine the first clock correction parameter and the second clock correction parameters. Exemplary implementations will be described in more detail with reference to FIG. 4 to FIG. 7.

FIG. 4 illustrates first synchronization messages 40 transmitted over the first network and second synchronization messages 50 transmitted over the second network. In the illustrative message flow shown in FIG. 4, a first clock offset 41 and a first propagation delay 42 may be determined based on the first synchronization message(s) 40, and a second clock offset 51 and a second propagation delay 52 may be determined based on the second synchronization message(s) 50. In the illustrated implementation, the Sync-message, Delay_Req-message and Delay_Resp-message defined in PTP may be transmitted between the electronic apparatus which operates as PTP slave and the further apparatus which operates as PTP master.

The master may transmit a Sync-message 43 which includes a time stamp $t1_A$, which indicates the value of the master clock at transmission time of the Sync-message 43. Alternatively, the time stamp $t1_A$ may be transmitted in a separate Follow_up-message defined in PTP. The electronic apparatus receives the message at a later time, at which the local clock of the electronic apparatus has a value $t2_A$. The value $t2_A$ depends on both the clock offset 41 between the master clock and the local clock of the electronic apparatus and the propagation delay 42 of the Sync-message 43 for propagation from the master to the slave. The electronic apparatus which operates as PTP slave may transmit a Delay_Req-message at a later time, at which the local clock of the electronic apparatus has a value $t3_A$. This Delay_Req-message is received at the PTP master at a time at which the master clock has a value $t4_A$. The value $t4_A$ is transmitted to the electronic apparatus which operates as slave in a Delay_Resp-message 44.

The electronic apparatus may determine a first clock offset $O_A$ and a first propagation delay $D_A$ based on the first synchronization message(s) according to:

$$O_A = [(t2_A - t1_A) - (t4_A - t3_A)]/2 \quad \text{and} \tag{1}$$

$$D_A = [(t2_A - t1_A) + (t4_A - t3_A)]/2. \tag{2}$$

Similarly, a Sync-message 53, a Delay_Req-message and a Delay_Resp-message 54 may be transmitted over the second network. Time values $t1_B$ and $t4_B$ of the master clock upon transmission of the Sync-message 53 and receipt of the Delay_Resp-message 54, respectively, as well as time values $t2_B$ and $t3_B$ of the local clock of the electronic apparatus upon reception of the Sync-message 53 and transmission of the Delay_Resp-message 54, respectively, may be used to determine the second clock offset $O_B$ and second propagation delay $D_B$ based on the second synchronization message(s). For illustration,

$$O_B = [(t2_B - t1_B) - (t4_B - t3_B)]/2 \quad \text{and} \tag{3}$$

$$D_B = [(t2_B - t1_B) + (t4_B - t3_B)]/2. \tag{4}$$

The first clock offset $O_A$ and the second clock offset $O_B$ may be combined with each other. For illustration, the clock offset O may be determined according to

$$O = (O_A + O_B)/2. \tag{6}$$

Information on the propagation of the synchronization messages through the first and second network may be used to combine the first clock offset $O_A$ and the second clock offset $O_B$. For illustration, the clock offset O may be determined as a weighted average according to

$$O = w_A \cdot O_A + w_B \cdot O_B. \tag{7}$$

The weighting factors may be set such that the ratio $w_A/w_B$ depends on the ratio of the propagation delays $D_A$ and $D_B$. The weighting factors may be set such that the ration $w_A/w_B$ is equal to the ratio $D_B/D_A$. The weighting factors may be set according to

$$w_A = D_B/(D_A+D_B) \text{ and} \tag{8}$$

$$w_B = D_A/(D_A+D_B). \tag{9}$$

The propagation delays may be determined in various ways and not only by the procedure illustrated in FIG. 4. The propagation delays may be determined using timing information which is written into the synchronization messages by devices along the transmission path of the synchronization messages. Alternatively or additionally, other criteria may be used for determining the clock offset O as a weighted average. For illustration, the weighting factors may be determined based on the sum of residence times of a first synchronization message on devices along the transmission path of the first synchronization message in the first network, and based on the sum of residence times of a second synchronization message on devices along the transmission path of the second synchronization message in the second network. The weighting factors may be determined based on a link delay on links over which the first synchronization messages are transmitted to the first network interface and a link delay on links over which the second synchronization messages are transmitted to the second network interface. In other embodiments, an averaging of the first and second clock offsets may be performed which is independent of propagation delays, to determine the clock offset O which is used for clock alignment. In other embodiments, an averaging of the first and second clock offsets may be performed which is independent of propagation delays, but in which the weighting factors are determined based on the first clock offset $O_A$ and the second clock offset $O_B$. For illustration, the smaller one of the two offsets may be weighted more strongly. One of the first and second clock offsets (e.g. the smaller one of the first and second clock offsets) may be selected as clock offset for clock alignment, the selection depending on both the first clock offset $O_A$ and the second clock offset $O_B$.

A combination of the first and second clock offsets is performed only if the two resulting corrections have different signs. For illustration, the corrections may be combined in any of the described ways only if $O_A$ is positive and $O_B$ is negative (or vice-versa). If both corrections have the same sign (both positive, or negative), the correction from the first arrived synchronization packet should be preferred.

Inaccuracies introduced by transparent clock switches depend on the residence time within these devices. These residence times can be taken into consideration when calculating the clock offset. For illustration, techniques for reducing the offset error may include one or several of the following: The electronic apparatus may determine whether the first synchronization message(s) transmitted over the first network or the second synchronization message(s) transmitted over the second network have smaller residence time. Information from the synchronization message(s) for which residence time is smaller may be weighted more strongly. When the residence times fulfil a predefined criterion, e.g. when one of the residence times is much smaller than the other one, information from the synchronization messages transmission path having the smaller accrued residence time may be used for determining the offset. The mean of the first and second clock offsets of both messages may be computed and used as a clock offset. A weighted mean function that depends on the timing information of the first and second synchronization messages may be computed to determine the clock offset.

Additionally or alternatively, the difference between the synchronization message reception interval at the PTP slave, which may be calculated with the slave ingress time stamps of the first and second synchronization messages, and a calculated estimation based on the carried PTP information can be used to adjust the clock offset of the clock at the electronic apparatus which serves as slave.

Additionally or alternatively, the history of the first and second synchronization messages can be used to estimate the quality of the currently received synchronization information and to accordingly weight the information of synchronization messages received at one network interface more strongly than the information of synchronization messages received at the other network interface.

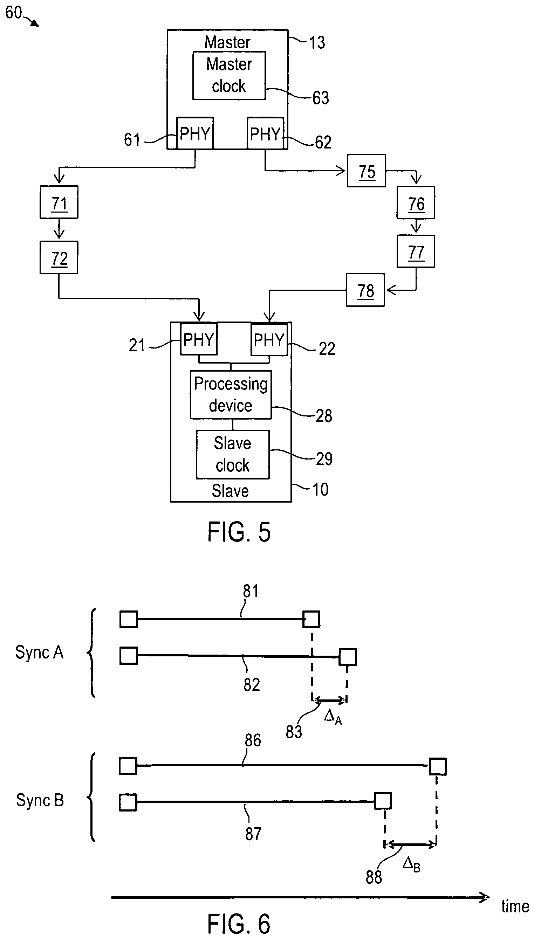

FIG. 5 illustrates a system 60 which includes an electronic apparatus 10 according to an embodiment. The electronic apparatus 10 may serve as a PTP slave. The system 60 may be an automation system of an electric power system. The electronic apparatus 10 includes a local clock 29. A processing device 28 is configured to determine a clock offset between a master clock 63 of a further apparatus 13 and the local clock 29. The processing device 28 may perform the functions of the redundancy module and synchronization module explained with reference to FIG. 2 to FIG. 4. The processing device 28 may be configured to determine the clock offset based on first synchronization messages received at a first network interface 21 and second synchronization messages received at a second network interface 22. The first and second network interfaces may be Ethernet ports.

The further apparatus 13 which acts as PTP master has a first network interface 61 and a second network interface 62. The further apparatus 13 outputs first synchronization messages at the first network interface 61. The first synchronization messages are received at devices 71 and 72 along a transmission path of the first synchronization messages. The devices 71 and 72 may be network switches. The devices 71, 72 may operate as transparent clocks. The devices 71, 72 may add timing information to the first synchronization messages. The timing information may include time stamps of local clocks of the devices 71, 72, information on link delays, or information on residence times. The residence times may indicate the time difference between ingress and egress of a synchronization message. The further apparatus 13 outputs second synchronization messages at the second network interface 62. The second synchronization messages are received at devices 75-78 along a transmission path of the second synchronization message(s). The devices 75-78 may be network switches. The devices 75-78 may operate as transparent clocks. The devices 75-78 may modify the second synchronization message(s), e.g. by adding timing information to the second synchronization message(s). The timing information may include time stamps of local clocks of the devices 75-78, information on link delays or information on residence times which may indicate the time difference between ingress and egress of a synchronization message.

The timing information included in a first synchronization message received at the first network interface 21 of the electronic apparatus 10 provides information on the transmission history of the first synchronization message. Similarly, the timing information included in a second synchronization message received at the second network interface 22 of the electronic apparatus 10 provides information on the transmission history of the second synchronization message. The timing information may be processed to select a procedure for computing the clock offset. The timing information may be processed to determine at least one of the following clock correction parameters for the first and second synchronization messages: residence time of the respective synchronization message on one of the devices 71-78; accumulated residence times of the respective synchronization message on the devices along the transmission path; difference between a propagation delay as determined by the timing information in a synchronization message and the real propagation delay.

FIG. 6 shows a diagram for explaining an exemplary mode of operation of the electronic apparatus 10. A first synchronization message, e.g. a PTP Sync message, is transmitted over the first network. The real propagation delay is shown at 81. Based on the timing information included in the first synchronization message, an estimate 82 for the propagation delay may be determined. A difference 83 between the estimate 82 and the real propagation delay 81 may be caused by accumulated clock drift effects and/or time stamping inaccuracies of the transparent clock routing devices 71, 72 which the first synchronization message passes. Similarly, a second synchronization message, e.g. a PTP Sync message, is transmitted over the second network. The real propagation delay is shown at 86. Based on the timing information included in the second synchronization message, an estimate 87 for the propagation delay may be determined. A difference 88 between the estimate 87 and the real propagation delay 86 may be caused by accumulated clock drift effects and/or time stamping inaccuracies of the transparent clock routing devices 75-78 which the second synchronization message passes. The differences 83 and 88 may be estimated based on the timing information included in the first and second synchronization message, respectively. For illustration, the inaccuracy which gives rise to the difference 83 or 88 between real and calculated propagation delay may depend on the accumulated residence time, which is known from the synchronization messages.

As visualized in FIG. 6, the calculated propagation delay 82, 87 can be smaller or greater than the real propagation delay 81, 86, but the difference 83, 88 is bounded. By combining the timing information of both synchronization messages, it is possible to reduce the overall error and to thereby increase the accuracy of the synchronization procedure. For illustration, by combining the errors 83, 88, e.g. by averaging, it is possible to compensate parts of the offset error without the risk of making the error worse. This happens when the calculated differences 83 and 88 ($\Delta_A$ and $\Delta_B$) present different signs.

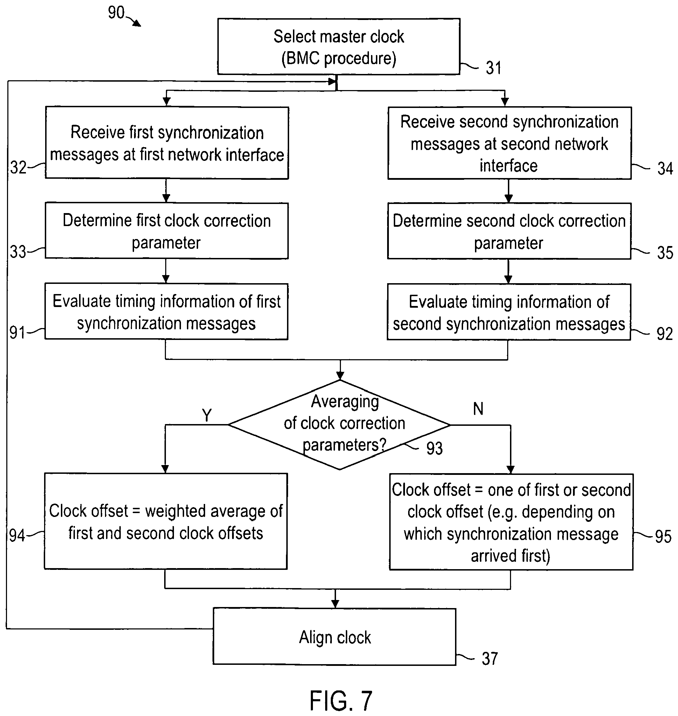

FIG. 7 is a flow chart of a method 90 of another embodiment. In the method 90, timing information included in the first and second synchronization messages is evaluated to determine whether a clock offset is computed as weighted average. The method 90 includes steps 31-35 which may be performed in the same way as described with reference to FIG. 3.

Additionally, at step 91, timing information of the first synchronization message(s) is evaluated. Step 91 may include establishing the residence time of the first synchronization message on devices along the transmission path. Step 91 may include processing a transmission history of the first synchronization message to thereby determine a quantifier for the reliability of a first clock offset parameter determined based on the first synchronization message. At step 92, timing information of the second synchronization message(s) is evaluated. Step 92 may include establishing the residence time of the second synchronization message on devices along the transmission path. Step 92 may include processing a transmission history of the first synchronization message to thereby determine a quantifier for the reliability of a second clock offset parameter determined based on the second synchronization message. The quantifiers for the reliability may include an inverse of the total propagation time or an inverse of the accrued residence times.

At step 93, a procedure for determining the clock offset is selected. Step 93 includes determining whether a first clock offset determined based on the first synchronization message and a second clock offset determined based on the second synchronization message are to be averaged. Step 93 may be performed based on residence times of the first synchronization message at devices along a transmission path of the first synchronization message and based on residence times of the second synchronization message at devices along a transmission path of the second synchronization message. Step 93 may include determining whether the differences 83, 88 between computed and real propagation delay have equal signs or different signs.

If it is determined that the clock offset is to be computed by averaging the first clock offset and the second clock offset, the method proceeds to step 94. At step 94, an averaging may be performed, as explained with reference to Equation (7). The weighting factors in Equation (7) may be set based on the timing information included in the first and second synchronization messages.

If it is determined that no averaging of the first and second clock offset parameters is to be performed, the method proceeds to step 95. At step 95, the clock offset may be set to be equal to one of the first clock offset or the second clock offset. For illustration, if the evaluation of the timing information included in the first and second synchronization messages at steps 91 and 92 indicates that time stamp inaccuracies and clock drifts of the first synchronization message are less than for the second synchronization message, the clock offset may be set equal to the first clock offset which is determined based on the first synchronization message. If the evaluation of the timing information included in the first and second synchronization messages at steps 91 and 92 indicates that time stamp inaccuracies and clock drifts of the second synchronization message are less than for the first synchronization message, the clock offset may be set equal to the second clock offset which is determined based on the second synchronization message.

The clock offset determined at step 94 or step 95 may be used to align the local clock of the electronic apparatus with the master clock at step 37. Steps 32-35, 91-95 and 37 may be repeated in each synchronization cycle.

While methods, electronic apparatuses and systems according to embodiments have been described with reference to the drawings, modifications may be implemented in other embodiments. For illustration, while some embodiments have been described in the context of specific PTP messages, the embodiments may also be used in combination with other synchronization messages. While first and second communication networks implemented as Ethernet-based networks may be used, other network technologies may also be used to provide redundant communication channels between a master clock and a slave apparatus.

Embodiments may generally be used for synchronization procedures. Synchronization of intelligent electronic devices (IEDs) for testing or monitoring electric power systems and industrial automation systems are exemplary areas in which embodiments may be used, but the embodiments are not limited thereto.

**Claims**

1. A method of synchronizing a clock of an electronic apparatus (10) with a master clock (63), the method comprising the following steps performed by the electronic apparatus (10):

   receiving, at a first network interface (21) of the electronic apparatus (10), at least one first synchronization message (43, 44) transmitted from a further apparatus (13) over a first network (11),
   receiving, at a second network interface (22) of the electronic apparatus (10), at least one second synchronization message (53, 54) transmitted from the further apparatus (13) over a second network (12) different from the first network (11),
   determining a first clock correction parameter (41; 83) from the at least one first synchronization message (43, 44) and determining a second clock correction parameter (51; 88) from the at least one second synchronization message (53, 54), and
   aligning the clock of the electronic apparatus (10) with the master clock (63), wherein both the first clock correction parameter (41; 83) and the second clock correction parameter (51; 88) are used for the aligning,
   **characterized by**
   determining whether the first and second clock correction parameters (41, 51; 83, 88) have different signs;
   wherein, when the first and second clock correction parameters (41, 51; 83, 88) have different signs, averaging of the first clock correction parameter (41; 83) and the second clock correction parameter (51; 88) is performed to perform the aligning, and
   wherein, when the first and second clock correction parameters (41, 51; 83, 88) have equal signs, a clock correction parameter is set equal to one of the first clock correction parameter or the second clock correction parameter.

2. The method of claim 1, wherein the apparatus comprises a redundancy module (23) and a synchronization module (24), the redundancy module (23) being interfaced with the first and second network interfaces (21, 22), the synchronization module (24) being interfaced with the redundancy module (23) and being configured to operate in accordance with the Precision Time Protocol, PTP, the method comprising:

   receiving the at least one first synchronization message (43, 44) and the at least one second synchronization message (53, 54) by the redundancy module (23),
   providing the at least one first synchronization message (43, 44) with a first network identifier from the redundancy module (23) to the synchronization module (24), and
   providing the at least one second synchronization message (53, 54) with a second network identifier from the redundancy module (23) to the synchronization module (24).

3. The method of claim 2,
   wherein the synchronization module (24) performs the determining and aligning steps.

4. The method of any one of the preceding claims,
   wherein the averaging is performed based on a first propagation delay of the at least one first synchronization message (43, 44) and a second propagation delay of the at least one second synchronization message (53, 54).

5. The method of any one of the preceding claims,
   wherein the averaging comprises: determining a clock correction parameter as a weighted average of the first clock correction parameter (41; 83) and the second clock correction parameter (51; 88).

6. The method of claim 5,
   wherein the weighted average is determined by weighting the first clock correction parameter (41; 83) with a first weighting factor and by weighting the second clock correction parameter (51; 88) with a second weighting factor.

7. The method of claim 6,

wherein a ratio of the first weighting factor to the second weighting factor is proportional to a ratio of a second propagation delay of the at least one second synchronization message (53, 54) to a first propagation delay of the at least one first synchronization message (43, 44).

8. The method of any one of the preceding claims,
   wherein, when the first and second clock correction parameters (41, 51; 83, 88) have equal signs, the clock correction parameter is set equal to the first clock correction parameter if a transmission time of the first synchronization message is shorter than a transmission time of the second synchronization message and is set equal to the second clock correction parameter if a transmission time of the second synchronization message is shorter than a transmission time of the first synchronization message.

9. The method of any one of the preceding claims,
   wherein the averaging is performed in dependence on timing information included in the at least one first synchronization message (43, 44) by first network devices (71, 72) along a transmission path of the at least one first synchronization message (43, 44), and in dependence on timing information included in the at least one second synchronization message (53, 54) by second network devices (75-78) along a transmission path of the at least one second synchronization message (53, 54).

10. The method of any one of the preceding claims,
    wherein the at least one first synchronization message (43, 44) and the at least one second synchronization message (53, 54) are messages according to the Precision Time Protocol, PTP.

11. The method of any one of the preceding claims,
    wherein the apparatus is an intelligent electronic device, IED, of an automation system of an electric power system.

12. An electronic apparatus, comprising:

    a first network interface (21) configured to receive at least one first synchronization message (43, 44) transmitted from a further apparatus (13) over a first network (11),
    a second network interface (22) configured to receive at least one second synchronization message (53, 54) transmitted from the further apparatus (13) over a second network (12),
    a processing device (23, 24; 28) configured to determine a first clock correction parameter (41; 83) from the at least one first synchronization message (43, 44) and to determine a second clock correction parameter (51; 88) from the at least one second synchronization message (53, 54), and to align a clock of the electronic apparatus (10) with a master clock (63) using both the first clock correction parameter (41; 83) and the second clock correction parameter (51; 88),
    **characterized in that**
    the processing device (23, 24; 28) is configured to determine whether the first and second clock correction parameters (41, 51; 83, 88) have different signs; and
    the processing device (23, 24; 28) is configured to

    when the first and second clock correction parameters (41, 51; 83, 88) have different signs, average the first clock correction parameter (41; 83) and the second clock correction parameter (51; 88) to align the clock of the electronic apparatus (10) with the master clock (63), and
    when the first and second clock correction parameters (41, 51; 83, 88) have equal signs, set a clock correction parameter equal to one of the first clock correction parameter or the second clock correction parameter.

13. The electronic apparatus of claim 12, wherein the processing device (23, 24; 28) comprises:

    a redundancy module (23) interfaced with the first and second network interfaces (21, 22), and
    a synchronization module (24) interfaced with the redundancy module (23) and configured to determine the first and second clock correction parameters (51; 88) and to align the clock of the electronic apparatus (10) with the master clock (63) as a function of both the first correction parameter and the second correction parameter.

14. An electric power system having an automation system, the automation system comprising:

    the electronic apparatus (10) of claim 12 or claim 13, and

a further apparatus (13) comprising a master clock (63) coupled to the electronic apparatus (10) by a first network (11) and a second network (12).

**Patentansprüche**

1. Verfahren zum Synchronisieren eines Takts einer elektronischen Vorrichtung (10) mit einem Haupttakt (63), wobei das Verfahren die folgenden Schritte umfasst, welche von der elektronischen Vorrichtung (10) ausgeführt werden:

   Empfangen mindestens einer ersten Synchronisationsnachricht (43, 44), welche von einer weiteren Vorrichtung (13) über ein erstes Netzwerk (11) übertragen wird, an einer ersten Netzwerkschnittstelle (21) der elektronischen Vorrichtung (10),
   Empfangen mindestens einer zweiten Synchronisationsnachricht (53, 54), welche von der weiteren Vorrichtung (13) über ein zu dem ersten Netzwerk (11) unterschiedliches zweites Netzwerk (12) übertragen wird, an einer zweiten Netzwerkschnittstelle (22) der elektronischen Vorrichtung (10),
   Bestimmen eines ersten Taktkorrekturparameters (41; 83) aus der mindestens einen ersten Synchronisationsnachricht (43, 44) und Bestimmen eines zweiten Taktkorrekturparameters (51; 88) aus der mindestens einen zweiten Synchronisationsnachricht (53, 54), und
   Angleichen des Takts der elektronischen Vorrichtung (10) an den Haupttakt (63), wobei sowohl der erste Taktkorrekturparameter (41; 83) als auch der zweite Taktkorrekturparameter (51; 88) für das Angleichen verwendet werden,
   **gekennzeichnet durch**
   Bestimmen, ob der erste und zweite Taktkorrekturparameter (41, 51; 83, 88) unterschiedliche Vorzeichen haben;
   wobei, wenn der erste und zweite Taktkorrekturparameter (41, 51; 83, 88) unterschiedliche Vorzeichen haben, ein Mitteln des ersten Taktkorrekturparameters (41; 83) und des zweiten Taktkorrekturparameters (51; 88) ausgeführt wird, um das Angleichen auszuführen, und
   wobei, wenn der erste und zweite Taktkorrekturparameter (41, 51; 83, 88) gleiche Vorzeichen haben, ein Taktkorrekturparameter entweder dem ersten Taktkorrekturparameter oder dem zweiten Taktkorrekturparameter gleichgesetzt wird.

2. Verfahren nach Anspruch 1, wobei die Vorrichtung ein Redundanzmodul (23) und ein Synchronisationsmodul (24) umfasst, wobei das Redundanzmodul (23) in Verbindung mit der ersten und zweiten Netzwerkschnittstelle (21, 22) ist, wobei das Synchronisationsmodul (24) in Verbindung mit dem Redundanzmodul (23) ist und ausgestaltet ist, gemäß dem Precision Time Protokoll, PTP, zu arbeiten, wobei das Verfahren umfasst:

   Empfangen der mindestens einen ersten Synchronisationsnachricht (43, 44) und der mindestens einen zweiten Synchronisationsnachricht (53, 54) mittels des Redundanzmoduls (23),
   Bereitstellen der mindestens einen ersten Synchronisationsnachricht (43, 44) mit einem ersten Netzwerkidentifikationskennzeichen von dem Redundanzmodul (23) zu dem Synchronisationsmodul (44), und
   Bereitstellen der mindestens einen zweiten Synchronisationsnachricht (53, 54) mit einem zweiten Netzwerkidentifikationskennzeichen von dem Redundanzmodul (23) zu dem Synchronisationsmodul (24).

3. Verfahren nach Anspruch 2,
   wobei das Synchronisationsmodul (24) die Schritte des Bestimmens und Angleichens ausführt.

4. Verfahren nach einem der vorhergehenden Ansprüche,
   wobei das Mitteln basierend auf einer ersten Laufzeitverzögerung der mindestens einen ersten Synchronisationsnachricht (43, 44) und einer zweiten Laufzeitverzögerung der mindestens einen zweiten Synchronisationsnachricht (53, 54) ausgeführt wird.

5. Verfahren nach einem der vorhergehenden Ansprüche,
   wobei das Mitteln umfasst: Bestimmen eines Taktkorrekturparameters als einen gewichteten Mittelwert des ersten Taktkorrekturparameters (41; 83) und des zweiten Taktkorrekturparameters (51; 88).

6. Verfahren nach Anspruch 5,
   wobei der gewichtete Mittelwert durch Gewichten des ersten Taktkorrekturparameters (41; 83) mit einem ersten Gewichtungsfaktor und durch Gewichten des zweiten Taktkorrekturparameters (51; 88) mit einem zweiten Gewichtungsfaktor bestimmt wird.

**7.** Verfahren nach Anspruch 6,
wobei ein Verhältnis des ersten Gewichtungsfaktors zu dem zweiten Gewichtungsfaktor proportional zu einem Verhältnis einer zweiten Laufzeitverzögerung von der mindestens einen zweiten Synchronisationsnachricht (53, 54) zu einer ersten Laufzeitverzögerung von der mindestens einen ersten Synchronisationsnachricht (43, 44) ist.

**8.** Verfahren nach einem der vorhergehenden Ansprüche,
wobei, wenn der erste und zweite Taktkorrekturparameter (41, 51; 83, 88) gleiche Vorzeichen haben, der Taktkorrekturparameter gleich dem ersten Taktkorrekturparameter gesetzt wird, wenn eine Übertragungszeit der ersten Synchronisationsnachricht kürzer als eine Übertragungszeit der zweiten Synchronisationsnachricht ist, und gleich dem zweiten Taktkorrekturparameter gesetzt wird, wenn eine Übertragungszeit der zweiten Synchronisationsnachricht kürzer als eine Übertragungszeit der ersten Synchronisationsnachricht ist.

**9.** Verfahren nach einem der vorhergehenden Ansprüche,
wobei das Mitteln in Abhängigkeit von einer Zeitinformation, welche in die mindestens eine erste Synchronisationsnachricht (43, 44) von ersten Netzwerkvorrichtungen (71, 72) entlang eines Übertragungspfads von der mindestens einen ersten Synchronisationsnachricht (43, 44) eingefügt wird, und in Abhängigkeit von einer Zeitinformation, welche in die mindestens eine zweite Synchronisationsnachricht (53, 54) von zweiten Netzwerkvorrichtungen (75-78) entlang eines Übertragungspfads von der mindestens einen zweiten Synchronisationsnachricht (53, 54) eingefügt wird, ausgeführt wird.

**10.** Verfahren nach einem der vorhergehenden Ansprüche,
wobei die mindestens eine erste Synchronisationsnachricht (43, 44) und die mindestens eine zweite Synchronisationsnachricht (53, 54) Nachrichten gemäß dem Precision Time Protokoll, PPP, sind.

**11.** Verfahren nach einem der vorhergehenden Ansprüche,
wobei die Vorrichtung eine intelligente elektronische Vorrichtung, IED, eines Automatisierungssystems eines elektrischen Stromversorgungssystems ist.

**12.** Elektronische Vorrichtung, umfassend:

eine erste Netzwerkschnittstelle (21), welche ausgestaltet ist, mindestens eine erste Synchronisationsnachricht (43, 44) zu empfangen, welche von einer weiteren Vorrichtung (13) über ein erstes Netzwerk (11) übertragen wird,
eine zweite Netzwerkschnittstelle (22), welche ausgestaltet ist, mindestens eine zweite Synchronisationsnachricht (53, 54) zu empfangen, welche von der weiteren Vorrichtung (13) über ein zweites Netzwerk (12) übertragen wird,
eine Verarbeitungsvorrichtung (23, 24; 28), welche ausgestaltet ist, einen ersten Taktkorrekturparameter (41; 83) aus der mindestens einen ersten Synchronisationsnachricht (43, 44) zu bestimmen und einen zweiten Taktkorrekturparameter (51; 88) aus der mindestens einen zweiten Synchronisationsnachricht (53, 54) zu bestimmen, und einen Takt der elektronischen Vorrichtung (10) an einen Haupttakt (63) unter Verwendung von sowohl dem ersten Taktkorrekturparameter (41; 83) als auch dem zweiten Taktkorrekturparameter (51; 88) anzugleichen,
**dadurch gekennzeichnet, dass**
die Verarbeitungsvorrichtung (23, 24; 28) ausgestaltet ist, zu bestimmen, ob der erste und zweite Taktkorrekturparameter (41, 51; 83, 88) unterschiedliche Vorzeichen haben; und
die Verarbeitungsvorrichtung (23, 24; 28) ausgestaltet ist,

wenn der erste und zweite Taktkorrekturparameter (41, 51; 83, 88) unterschiedliche Vorzeichen haben, den ersten Taktkorrekturparameter (41; 83) und den zweiten Taktkorrekturparameter (51; 88) zu mitteln, um den Takt der elektronischen Vorrichtung (10) an den Haupttakt (63) anzugleichen, und,
wenn der erste und zweite Taktkorrekturparameter (41, 51; 83, 88) gleiche Vorzeichen haben, einen Taktkorrekturparameter entweder dem ersten Taktkorrekturparameter oder dem zweiten Taktkorrekturparameter gleichzusetzen.

**13.** Elektronische Vorrichtung nach Anspruch 12, wobei die Verarbeitungsvorrichtung (23, 24; 28) umfasst:

ein Redundanzmodul (23), welches in Verbindung mit der ersten und zweiten Netzwerkschnittstelle (21, 22) ist, und

ein Synchronisationsmodul (24), welches in Verbindung mit dem Redundanzmodul (23) ist und ausgestaltet ist, den ersten und zweiten Taktkorrekturparameter (51; 88) zu bestimmen und den Takt der elektronischen Vorrichtung (10) an den Haupttakt (63) als eine Funktion von sowohl dem ersten Korrekturparameter als auch dem zweiten Korrekturparameter anzugleichen.

14. Elektrisches Stromversorgungssystem mit einem Automatisierungssystem, wobei das Automatisierungssystem umfasst:

die elektronische Vorrichtung (10) nach Anspruch 12 oder Anspruch 13, und
eine weitere Vorrichtung (13), welche einen Haupttakt (63) umfasst, welcher mit der elektronischen Vorrichtung (10) über ein erstes Netzwerk (11) und ein zweites Netzwerk (12) gekoppelt ist.

## Revendications

1. Procédé de synchronisation d'une horloge d'un appareil électronique (10) avec une horloge maîtresse (63), le procédé comprenant les étapes suivantes effectuées par l'appareil électronique (10) :

la réception, au niveau d'une première interface réseau (21) de l'appareil électronique (10), d'au moins un premier message de synchronisation (43, 44) transmis depuis un appareil supplémentaire (13) sur un premier réseau (11),
la réception, au niveau d'une seconde interface réseau (22) de l'appareil électronique (10), d'au moins un second message de synchronisation (53, 54) transmis depuis l'appareil supplémentaire (13) sur un second réseau (12) différent du premier réseau (11),
la détermination d'un premier paramètre de correction d'horloge (41 ; 83) à partir de l'au moins un premier message de synchronisation (43, 44) et la détermination d'un second paramètre de correction d'horloge (51 ; 88) à partir de l'au moins un second message de synchronisation (53, 54), et
l'alignement de l'horloge de l'appareil électronique (10) avec l'horloge maîtresse (63), dans lequel à la fois le premier paramètre de correction d'horloge (41 ; 83) et le second paramètre de correction d'horloge (51 ; 88) sont utilisés pour l'alignement,
**caractérisé par**
le fait de déterminer si les premier et second paramètres de correction d'horloge (41, 51 ; 83, 88) ont des signes différents ;
dans lequel, lorsque les premier et second paramètres de correction d'horloge (41, 51 ; 83, 88) ont des signes différents, le calcul de la moyenne du premier paramètre de correction d'horloge (41 ; 83) et du second paramètre de correction d'horloge (51 ; 88) est effectué pour effectuer l'alignement, et
dans lequel, lorsque les premier et second paramètres de correction d'horloge (41, 51 ; 83, 88) ont des signes égaux, un paramètre de correction d'horloge est réglé pour être égal à l'un du premier paramètre de correction d'horloge ou du second paramètre de correction d'horloge.

2. Procédé selon la revendication 1, dans lequel l'appareil comprend un module de redondance (23) et un module de synchronisation (24), le module de redondance (23) étant interfacé avec les première et seconde interfaces réseau (21, 22), le module de synchronisation (24) étant interfacé avec le module de redondance (23) et étant configuré pour fonctionner selon le protocole de précision temporelle, PTP, le procédé comprenant :

la réception de l'au moins un premier message de synchronisation (43, 44) et de l'au moins un second message de synchronisation (53, 54) par le module de redondance (23),
la fourniture à l'au moins un premier message de synchronisation (43, 44) d'un premier identifiant de réseau du module de redondance (23) au module de synchronisation (24), et
la fourniture à l'au moins un second message de synchronisation (53, 54) d'un second identifiant de réseau du module de redondance (23) au module de synchronisation (24).

3. Procédé selon la revendication 2,
dans lequel le module de synchronisation (24) effectue les étapes de détermination et d'alignement.

4. Procédé selon l'une quelconque des revendications précédentes,
dans lequel le calcul de la moyenne est effectué d'après un premier retard de propagation de l'au moins un premier message de synchronisation (43, 44) et un second retard de propagation de l'au moins un second message de synchronisation (53, 54).

5. Procédé selon l'une quelconque des revendications précédentes,
dans lequel le calcul de la moyenne comprend : la détermination d'un paramètre de correction d'horloge en tant que moyenne pondérée du premier paramètre de correction d'horloge (41 ; 83) et du second paramètre de correction d'horloge (51 ; 88).

6. Procédé selon la revendication 5,
dans lequel la moyenne pondérée est déterminée en pondérant le premier paramètre de correction d'horloge (41 ; 83) avec un premier facteur de pondération et en pondérant le second paramètre de correction d'horloge (51 ; 88) avec un second facteur de pondération.

7. Procédé selon la revendication 6,
dans lequel un rapport entre le premier facteur de pondération et le second facteur de pondération est proportionnel à un rapport entre un second retard de propagation de l'au moins un second message de synchronisation (53, 54) et un premier retard de propagation de l'au moins un premier message de synchronisation (43, 44).

8. Procédé selon l'une quelconque des revendications précédentes,
dans lequel, lorsque les premier et second paramètres de correction d'horloge (41, 51 ; 83, 88) ont des signes égaux, le paramètre de correction d'horloge est réglé pour être égal au premier paramètre de correction d'horloge si un temps de transmission du premier message de synchronisation est plus court qu'un temps de transmission du second message de synchronisation et est réglé pour être égal au second paramètre de correction d'horloge si un temps de transmission du second message de synchronisation est plus court qu'un temps de transmission du premier message de synchronisation.

9. Procédé selon l'une quelconque des revendications précédentes,
dans lequel, le calcul de la moyenne est effectué en fonction d'informations de temporisation incluses dans l'au moins un premier message de synchronisation (43, 44) par des premiers dispositifs de réseau (71, 72) le long d'un chemin de transmission de l'au moins un premier message de synchronisation (43, 44), et en fonction d'informations de temporisation incluses dans l'au moins un second message de synchronisation (53, 54) par des seconds dispositifs de réseau (75 à 78) le long d'un chemin de transmission de l'au moins un second message de synchronisation (53, 54).

10. Procédé selon l'une quelconque des revendications précédentes,
dans lequel l'au moins un premier message de synchronisation (43, 44) et l'au moins un second message de synchronisation (53, 54) sont des messages selon le protocole de précision temporelle, PTP.

11. Procédé selon l'une quelconque des revendications précédentes,
dans lequel l'appareil est un dispositif électronique intelligent, IED, d'un système d'automatisation d'un système d'alimentation électrique.

12. Appareil électronique, comprenant :

une première interface réseau (21) configurée pour recevoir au moins un premier message de synchronisation (43, 44) transmis depuis un appareil supplémentaire (13) sur un premier réseau (11),
une seconde interface réseau (22) configurée pour recevoir au moins un second message de synchronisation (53, 54) transmis depuis l'appareil supplémentaire (13) sur un second réseau (12),
un dispositif de traitement (23, 24 ; 28) configuré pour déterminer un premier paramètre de correction d'horloge (41 ; 83) à partir de l'au moins un premier message de synchronisation (43, 44) et pour déterminer un second paramètre de correction d'horloge (51 ; 88) à partir de l'au moins un second message de synchronisation (53, 54), et pour aligner une horloge de l'appareil électronique (10) avec une horloge maîtresse (63) à l'aide à la fois du premier paramètre de correction d'horloge (41 ; 83) et du second paramètre de correction d'horloge (51 ; 88),
**caractérisé en ce que**
le dispositif de traitement (23, 24 ; 28) est configuré pour déterminer si les premier et second paramètres de correction d'horloge (41, 51 ; 83, 88) ont des signes différents ; et
le dispositif de traitement (23, 24 ; 28) est configuré pour
lorsque les premier et second paramètres de correction d'horloge (41, 51 ; 83, 88) ont des signes différents, calculer la moyenne du premier paramètre de correction d'horloge (41 ; 83) et du second paramètre de correction d'horloge (51 ; 88) pour aligner l'horloge de l'appareil électronique (10) avec l'horloge maîtresse (63), et lorsque les premier et second paramètres de correction d'horloge (41, 51 ; 83, 88) ont des signes égaux, régler un paramètre de correction d'horloge pour être égal à l'un du premier paramètre de correction d'horloge ou du second paramètre de correction d'horloge.

13. Appareil électronique selon la revendication 12, dans lequel le dispositif de traitement (23, 24 ; 28) comprend :

un module de redondance (23) interfacé avec les première et seconde interfaces réseau (21, 22), et un module de synchronisation (24) interfacé avec le module de redondance (23) et configuré pour déterminer les premier et second paramètres de correction d'horloge (51 ; 88) et pour aligner l'horloge de l'appareil électronique (10) avec l'horloge maîtresse (63) en fonction à la fois du premier paramètre de correction et du second paramètre de correction.

14. Système d'alimentation électrique ayant un système d'automatisation, le système d'automatisation comprenant :

l'appareil électronique (10) selon la revendication 12 ou la revendication 13, et un appareil supplémentaire (13) comprenant une horloge maîtresse (63) couplée à l'appareil électronique (10) par un premier réseau (11) et un second réseau (12).

1

PTP Master ~13

Network A

Sync$_A$

11

Network B

Sync$_B$

12

PTP Slave ~10

## FIG. 1

10

Application
25

1588 Module
24

Red. Module
23

PHY
21

PHY
22

Network A
11

Network B
12

## FIG. 2

FIG. 3

FIG. 4

60 ⟍

Master — 13

Master clock — 63

61 — PHY        PHY — 62

71

72

75

76

77

78

PHY — 21        PHY — 22

Processing device — 28

Slave clock — 29

Slave — 10

FIG. 5

Sync A {

81

82

83 — $\Delta_A$

Sync B {

86

87

88 — $\Delta_B$

time

FIG. 6

90

Select master clock
(BMC procedure) — 31

Receive first synchronization
messages at first network interface

32

Receive second synchronization
messages at second network
interface — 34

Determine first clock correction
parameter

33

Determine second clock correction
parameter — 35

Evaluate timing information of first
synchronization messages

91

Evaluate timing information of
second synchronization messages — 92

Averaging
of clock correction
parameters? — 93

Y

N

Clock offset = weighted average of
first and second clock offsets

94

Clock offset = one of first or second
clock offset (e.g. depending on
which synchronization message
arrived first) — 95

Align clock — 37

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03028258 A1
- WO 03028259 A1
- US 6252445 B1

- EP 2254267 A1
- EP 2209239 A2